(19) Europäisches Patentamt
European Patent Office
Office européen des brevets

(11) **EP 4 645 123 A1**

(12) **EUROPEAN PATENT APPLICATION**

(43) Date of publication:
**05.11.2025 Bulletin 2025/45**

(21) Application number: **24173063.9**

(22) Date of filing: **29.04.2024**

(51) International Patent Classification (IPC):
**G06F 17/18** *(2006.01)* **B60W 60/00** *(2020.01)*

(52) Cooperative Patent Classification (CPC):
**G06F 17/18; G01S 17/931**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Aptiv Technologies AG**
**8200 Schaffhausen (CH)**

(72) Inventor: **DARNFORS, Hanna**
**8200 Schaffhausen (CH)**

(74) Representative: **Manitz Finsterwald**
**Patent- und Rechtsanwaltspartnerschaft mbB**
**Martin-Greif-Straße 1**
**80336 München (DE)**

(54) **METHODS AND SYSTEM FOR DETERMINING A MEAN AND A VARIANCE OF MEASUREMENT DATA**

(57) A computer implemented method for determining a mean and a variance of measurement data comprises the following steps carried out by computer hardware components: acquiring measurement data for a present time step using a sensor; updating a plurality of intermediate data for a previous time step based on the measurement data for the present time and based on a forgetting factor to obtain a plurality of intermediate data for the present time step; and determining the mean and the variance for the present time step based on the plurality of intermediate data for the present time step.

**Description**

FIELD

The present disclosure relates to methods and system for determining a mean and a variance of measurement data.

BACKGROUND

Computing sample mean and sample variance of large data sets in order to do statistical hypothesis testing may be used in various different types of fields and for many various applications. Often the application is such that the computations can be done offline when all data is already collected. In online applications, such as for example tracking/ filtering of road users with help of radars, however, detections may be collected over time and more and more information may be gained as time goes.

However, computing of mean and variance of large data sets may be computationally expensive and require a large amount of memory.

Accordingly, there is a need to provide enhanced methods for determining mean and variance of data sets.

SUMMARY

The present disclosure provides a computer implemented method, a computer system, a vehicle, and a non-transitory computer readable medium according to the independent claims. Embodiments are given in the subclaims, the description and the drawings.

In one aspect, the present disclosure is directed at a computer implemented method for determining a mean of measurement data and a variance of the measurement data, the method comprising the following steps performed (in other words: carried out) by computer hardware components: acquiring measurement data for a present time step using a sensor; updating a plurality of intermediate data for a previous time step based on the measurement data for the present time and based on a forgetting factor to obtain a plurality of intermediate data for the present time step; and determining the mean and the variance for the present time step based on the plurality of intermediate data for the present time step. The previous time step may be a time step immediately before the present time step. The time steps may be provided in a pre-determined fixed interval, for example based on how often new measurement data is available.

According to various embodiments, the method may be carried out iteratively, so that after the present time step, the method is carried out again for a subsequent time step (in which the present time step becomes the previous time step).

According to various embodiments, the sensor may be a radar sensor or a lidar sensor.

According to various embodiments, the intermediate data comprises three numbers. For example, the intermediate data for the present time step may include three numbers for the present time step; the intermediate data for the previous time step may include three numbers for the previous time step.

According to various embodiments, the three numbers are initialized with values of 0 (for example for a first time step; for example when a first run (in other words: first iteration) of the method is carried out; for example as the intermediate data for the previous time step). In other words, each of the three numbers for the first time step is set to zero. The first time step may then be the previous time step in the first iteration of the method.

According to various embodiments, the three numbers comprise a first number, a second number, and a third number. According to various embodiments, updating the first number comprises multiplying the first number by the forgetting factor and adding a number of measurements included in the measurement data. According to various embodiments, updating the second number comprises multiplying the second number by the forgetting factor and adding the measurements included in the measurement data. According to various embodiments, updating the third number comprises multiplying the third number by the forgetting factor and adding squares of the measurements included in the measurement data. The updating will be described in formulas in equation (1) below.

According to various embodiments, determining the mean comprises determining a ratio between the second number and the first number. Determining the mean will be described in formulas in equation (2) below.

According to various embodiments, determining the variance comprises determining a ratio between a difference of the third number and a square of the mean and a difference between the first number and 1. Determining the variance will be described in formulas in equation (3) below.

According to various embodiments, the forgetting factor may be a number between 0 and 1. The lower the forgetting factor, the lower the influence of older measurement data to the mean and variance may be.

According to various embodiments, the measurement data comprises height information.

An assumption of constant position/height of the detected object may not be applicable for moveable objects. According to various embodiments, the inclusion of the forgetting factor into the mean and variance determining may provide enhanced results. Under the assumption that radar elevation angle accuracy is approximately the same independent of object range, the height variance may be larger at further distances, and this may also be taken into account by including the forgetting factor according to various embodiments.

According to various embodiments, the computer implemented method further comprises the following step carried out by the computer hardware components: determining underdrivability and/or overdrivability based on the mean and the variance.

According to various embodiments, the underdrivability and/or the overdrivability is determined based on a Student's T distribution based on the mean and the variance.

According to various embodiments, the measurement data comprises range rate information.

According to various embodiments, the computer implemented method further comprises the following step carried out by the computer hardware components: determining outliers in an association method during object tracking. An outlier may be a measurement that is associated to an object, but actually does not belong to the object (but for example to another object, or for example is a noisy measurement).

According to various embodiments, the outliers are determined based on thresholds, wherein the thresholds are determined based on the mean and the variance.

According to various embodiments, the method may provide an iterative and adaptive mean and variance filter, for example with (or for use in) hypothesis testing.

In another aspect, the present disclosure is directed at a computer system, said computer system comprising a plurality of computer hardware components configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle, comprising the computer system and the sensor as described herein.

In another aspect, the present disclosure is directed at a non-transitory computer readable medium comprising instructions for carrying out (in other words: instructions which, when executed by a computer system, make the computer system carry out) several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

DRAWINGS

Exemplary embodiments and functions of the present disclosure are described herein in conjunction with the following drawings, showing schematically:

Fig. 1    a flow diagram illustrating a method for determining a mean and a variance of measurement data according to various embodiments; and

Fig. 2    a computer system with a plurality of computer hardware components configured to carry out steps of a computer implemented method for determining a mean and a variance of measurement data according to various embodiments.

DETAILED DESCRIPTION

Large amounts of data may be acquired for various purposes. For example, large amounts of data may be acquired by sensors (for example radar sensors, and/ or lidar sensors, and/ or odometry sensors) for (at least partially) autonomously driving vehicles. The large data sets may include a plurality of measurements, wherein each measurement may be referred to as a sample. Using each of the samples individually may not be appropriate, for example due to high computational effort and/or due to noise and/or due to the presence of outliers. Accordingly, numbers that may be obtained for the entire set of samples or for a subset of the samples (for example for a pre-determined number of most recent samples) may be used. The number may for example represent one or more statistical properties of the samples. Examples of such numbers may be the mean of the samples and the variance of the samples.

Computing sample mean and sample variance of large data sets in order to do statistical hypothesis testing may be used in various different types of fields and for many various applications. For example, the application may be such that the computations can be done offline when all data is already collected. In online applications such as for example tracking/filtering of road users with help of radars, however, detections may be collected over time and more and more information may be gained as time goes.

According to various embodiments, methods and devices are provided for determining the mean and variance in an iterative process which makes it possible to implement it also for online applications, even if the mean and variance are changing over time. The iterative determination of the mean and variance may make the determination suitable for use on signals (in other words: on samples) which could have time varying mean and variance.

According to various embodiments, the mean and variance of a signal $e_n$ (which has been acquired at various time steps, for example at time steps n=1, 2, ... N with an integer number N) at current time n = $N$ may be estimated, even when the signal mean and/or variance vary over time.

At each time instance, there may be multiple noisy measurements of the signal $y_{n,i}$ where $i \in \{1, 2 ..., k_n\}$ and $k_n$ is the number of measurements obtained at time $n$. The signal $y_{n,i}$ may also be referred to as measurement data. For example, $y_{n,i}$ may be referred to as measurement data of the previous time step; and $y_{n+1)i}$ may be referred to as measurement data of the present time step. Accordingly, it will be understood that for each time step, the measurement data may include a plurality of measurements.

According to various embodiments, aggregating the measurement data may be used to determine the mean $\bar{e}_N$ and the variance $\hat{e}_N$ as follows:

$$\bar{e}_N = \frac{1}{\sum_{n=1}^{N}\left(\lambda^{(N-n)}k_n\right)} \sum_{n=1}^{N}\left(\lambda^{(N-n)}\sum_{i=1}^{k_n}\left(y_{n,i}\right)\right),$$

and

$$\hat{e}_N = \frac{1}{\sum_{n=1}^{N}\left(\lambda^{(N-n)}k_n\right)-1} \left(\sum_{n=1}^{N}\left(\lambda^{(N-n)}\sum_{i=1}^{k_n}\left(y_{n,i}^2\right)\right) - \bar{e}_N^{\,2}\right).$$

In the above equations, the variable $\lambda$ is a tuning parameter corresponding to a forgetting factor which causes newer measurements to have larger weight than older measurements. $\lambda$ may be a fixed number in a range between zero and one: $0 \leq \lambda \leq 1$. A value of $\lambda$ of zero would correspond to only taking into account the latest measurement (i.e. the measurements $y_{N,i}$). A value of $\lambda$ of one would correspond to not forgetting older measurements but considering all measurements from the past with equal weights.

One way of aggregating sufficient information to compute the desired mean and variance is to save all measurements over time. For an online real time application this is however not feasible because memory consumption is restricted.

According to various embodiments, a state vector $s_n$ (which may be referred to as intermediate data) may be defined as follows:

$$s_n = \begin{bmatrix} s_{1,n} & s_{2,n} & s_{3,n} \end{bmatrix}^T : \triangleq$$

$$\begin{bmatrix} \sum_{n=1}^{N}\left(\lambda^{(N-n)}k_n\right) & \sum_{n=1}^{N}\left(\lambda^{(N-n)}\sum_{i=1}^{k_n}\left(y_{n,i}\right)\right) & \sum_{n=1}^{N}\left(\lambda^{(N-n)}\sum_{i=1}^{k_n}\left(y_{n,i}^2\right)\right) \end{bmatrix}^T.$$

According to various embodiments, this state vector may iteratively be updated online, for example each time new measurements are obtained. The state update may be done according to

$$s_{n+1} = \begin{bmatrix} k_{n+1} + \lambda s_{1,n} & \sum_{i=1}^{k_{n+1}}\left(y_{n+1,i}\right) + \lambda s_{2,n} & \sum_{i=1}^{k_{n+1}}\left(y_{n+1,i}^2\right) + \lambda s_{3,n} \end{bmatrix}^T \qquad (1).$$

From the above formula, it will be understood that according to various embodiments, the intermediate data may be updated with only new measurement information and there may be no need of storing all the older measurements.

From the state vector, the mean $\bar{e}_N$ and variance $\hat{e}_N$ at current time n = N may be computed as

$$\bar{e}_N = \frac{s_{2,N}}{s_{1,N}} \qquad\qquad (2)$$

$$\hat{e}_N = \frac{s_{3,n} - \bar{e}_N{}^2}{s_{1,N} - 1} \qquad\qquad (3).$$

It will be understood that equation (3) can only be computed for $s_{1,N}$ larger than 1.

The forgetting factor may contribute to putting less trust in measurements/data points that are older compared to detection points that are newer and may prevent the mean and variance filter to converge to some fixed number.

According to various embodiments, the determination of the mean and variance (which may be referred to as a filter) may be used in combination with a commonly used statistical testing method, for example a Student's T hypothesis testing.

According to various embodiments, under-/overdrivability detection of moving objects which are tracked with only radar detections may be carried out, like will be described in the following.

Under-/overdrivability detection may be understood as determination whether it is possible for an ego-vehicle to driver under or over another object (for example because there is a bridge), or whether it is not possible for an ego-vehicle to drive under or over another object (for example because there is no bridge but an ordinary road crossing or intersection). Under-/overdrivability detection classification may refer to determining one of a plurality of classes (which for example may indicate how certain it is that an object is underdrivable or overdrivable).

Radar detections may be obtained on overhead moving objects, for example vehicles passing over the host vehicle's path on a bridge. Without any height classification/estimation of these objects, they can cause issues, for example when using these detections in radar tracker applications (for example, these kinds of objects may be mistaken for an on the ground crossing object and might therefor cause interventions such as warning sounds inside the host vehicle or even causing the host vehicle to brake).

For example, when an ego vehicle (in other words: host vehicle) is approaching an intersection with a side road from left or right, and another car is also approaching the intersection on the side road, a collision may be possible if none of the cars is braking and the driver should be made aware of this. In such a situation, under-/overdrivability is not present.

In another example, when a host vehicle is approaching a bridge which is crossing over the road on which host is driving, and another car is crossing the bridge, no collision is possible and therefore driver should not be notified of any possible danger. In such a situation, under-/overdrivability is present.

According to various embodiments, for each estimated (in other words: tracked) radar object, the mean and variance filter may be applied to the elevation (in other words: height) measurements of the associated radar detections. The mean and variance may be determined iteratively, and accordingly, information may be accumulated over time (while it may not be necessary to store individual detections over time since filter is iterative, but only the three single states of the mean and variance filter may be stored). In each time frame, a Student's T hypothesis test may be applied to the estimated object mean and variance of the height to test if it is possible that the object height is below a pre-determined threshold, which may be a tuning parameter.

Using the forgetting factor in the determination of the mean and the variance may provide that the determination may be applied to objects that may have a varying height over time. It will be understood that "height" may refer to a vertical distance with respect to the host vehicle. For example, objects may take a ramp from a highway that slopes upwards towards a crossing bridge that crosses above the highway on which the host vehicle is driving. This may be a big difference compared to stationary environments which are at the same height over ground always.

According to various embodiments, estimation of object height variance in addition to only the mean height may lead to better results compared to taking the variance information directly from radar specs. For example, the variance may differ depending on the circumstances such as which type of object it is (for example truck, or car, or pedestrian), where in radar field of view the object is and others. Accordingly, using information from radar spec may not always be representative of the true data.

Furthermore, in situations where the method needs to work similarly well for different types of radars and configurations that have different specs, by estimating the variance, it may be possible to have one single filter with the same tuning for all different configurations rather than needing to have different tunings for different configurations and which have different performance when it comes to measuring target elevation/height. This may make tracker code maintenance and integration easier. The methods according to various embodiments may, for example, be used for gen 5 radars with +-2deg elevation accuracy according to sensor specification as well as for gen 7 HD radar with +-0.1 deg elevation accuracy according to radar specifications (as well as variants with accuracies in between these two values). Accordingly, a difference of about a factor of 20 for the worst compared to the best may be present.

According to various embodiments, an underdrivable classification enumeration value may be assigned to each of the tracked objects that are classified as moveable. For example, the possible enumeration values to choose from are:

- CAN_NOT_PASS_UNDER (for example to indicate that it is not possible for the host vehicle to pass under the tracked object);
- IS_LIKELY TO_PASS_UNDER (for example to indicate that it is likely possible for the host vehicle to pass under the tracked object);
- CAN_PASS_UNDER (for example to indicate that it is possible for the host vehicle to pass under the tracked object);
- NOT_TO_CONSIDER/UNKNOWN (for example to indicate that it is not possible to determine whether the host vehicle can pass under the tracked object, or to indicate that the tracked object does not need to be taken into consideration for further processing, for example for taking a driving decision).

According to various embodiments, the method for underdrivable classification may include the following steps:

1. The state vector $s_n$ may be initialized with zeros: $s_n = [s_{1,n} \ s_{2,n} \ s_{3,n}]^T = [0 \ 0 \ 0]^T$ for n=0.
For each time and each moveable object, the following steps may be carried out:

2. (Radar) detections may be associated to the object. This step may be the same association that may be done in order to run a Kalman filter for tracking the object's 2D (two-dimensional) position (without a height), speed, and/or heading, and various methods may be used for associating the radar detections to the object.

3. For each associated detection, the detection height over ground (assuming flat ground) may be determined, for example utilizing the measured range and elevation angle for the detection and the mounting height of the sensor. If the determined height is negative, then the absolute value of the height may be used; this may be done due to the occurrence of ground bounces for which the computed detection height may have the wrong sign.

4. The state vector may be updated according to equation (1) as described above with the new height information from all associated detections (wherein the sample (or measurement data) based on which the state vector is updated may be the new height information from all associated detections). Under the assumption that the detection measurements are normally distributed, this test variable is distributed according to the Student's T distribution with $s_{1,N}$-1 degrees of freedom.

5. The mean $\bar{e}_N$ and the variance $\hat{e}_N$ of the detection height may be determined according to equations (2) and (3). This step and the remaining steps may only be done if $s_{1,N}$ (corresponding to aggregated number of detections) is larger than 1 (to avoid division by zero, and the variance is not defined for only one measurement). If $s_{1,N}$ is smaller than or equal to 1, then the object may be assigned the underdrivable enumeration value NOT_TO_CONSIDER/UNKNOWN to indicate that there is insufficient number of data points to do the classification.

$$t_N \triangleq \frac{\bar{e}_N - h}{\sqrt{\hat{e}_N / s_{1,N}}}$$

6. A test variable may be determined, wherein $h$ may be a tuning variable defining a height threshold for underdrivability classification. The test variable $t_N$ may be based on a Student's T distribution with $s_{1,N}$-1 degrees of freedom under the assumption that the height measurements are normally distributed with mean h.

7. The Student's T p-value may be determined. This may be given by the cumulative Student's T distribution function. An approximative method for determining this probability value may be used, and various methods are known and commonly used for this determination. The p-value may correspond to "the probability under the assumption of no effect or no difference (null hypothesis), of obtaining a result equal to or more extreme than what was actually observed". As used herein, the null hypothesis may be that the object is "above ground" where "above ground" may be defined to be above h meters, where h may be the tuning parameter referred to in the above. So what is tested may be the likeliness to obtain the estimated mean and variance given null hypothesis. The p-value may be this probability and if the p-value is small then it may not be very likely that the null hypothesis is correct (i.e. the object is likely on the ground) but if the p-value is large, then it may be likely that the null hypothesis is correct and that the object is above ground.

8. The obtained p-value may be compared against thresholds, for example a lower threshold (lower_threshold) and an upper threshold (high_threshold). The thresholds may be tuning parameters.

If the p-value is lower than the lower threshold, a classification value indicating that the host vehicle cannot pass under the object may be assigned:

$$p\_value < lower\_threshold => CAN\_NOT\_PASS\_UNDER$$

If the p-value is between the lower threshold and the upper threshold, a classification value indicating that the host vehicle can most likely pass under the object may be assigned:

$$lower\_threshold \leq p\_value \leq high\_threshold => IS\_LIKELY\_TO\_PASS\_UNDER$$

If the p-value is higher than the upper threshold, a classification value indicating that the host vehicle can pass under the object may be assigned:

$$p\_value > high\_threshold => CAN\_PASS\_UNDER$$

9. In addition or alternatively to the enumeration value, a probability value may be provided as an output.

It will be understood that although steps 1 to 9 are described for the example of underdrivability classification, similar steps may be carried out for overdrivability classification.

According to various embodiments, rejection of range rate outlier measurements may be performed prior to performing Kalman filter measurement update, like will be described in the following.

When tracking multiple extended objects (for example an unknown number of extended object) with radar trackers, the data association problem (in other words: the problem of determining which of the obtained radar detections belongs to which tracked object) may be a key problem to solve. An "extended object" may be an object with a spatial extension (in contrast to an object which is a point only).

The data association problem may be solved by comparing the radar detections properties, such as detection position and detection range rate, with the properties of the tracked objects, such as position and velocity. If the properties of a detection are "similar enough" to the properties of the object, the detection may be associated to the object (which may mean that the detection may be used to update and improve the estimates of the object properties). This may be the way the data association problem is commonly solved in the context of Kalman filtering.

How similar "similar enough" is, may be referred to as "the detection being inside of the association gate of the object". The size of the associating gates may have to be large enough to account for various error sources such as the accuracy of the measured detection properties and the accuracy of the estimated object properties. For example, there may be a large uncertainty in the tracked object state and since the performance of the detection to object association is dependent on the accuracy of the tracking, it may be desired that the gates are large. Because of this, it may happen that detections that do not actually originate from the object itself are associated to the object (so that bad detections/outliers are associated). Examples of this may for example be when a slow moving object is driving close to a stationary object (for example close to the guardrail), when two cars with similar speed are driving close to each other in adjacent lanes, or when the radar picks up detections from a spinning wheel of a moving object (wherein the measured range rate may be slightly wrong since the wheel has slightly different velocity compared to the object itself). Due to the nature of the underlying assumptions of a Kalman filter (which may include assumption of normally distributed signals and measurements where the normal distribution has rather short tails), Kalman filters may be sensitive to outliers. Accordingly, using outlier measurement in the Kalman filter update may easily lead to corrupted/inaccurate (state) estimates. Therefore, it may be desirable to be able to find and remove the outliers before updating the filter. This may commonly be done in a step after the association. In this step (in commonly used methods for finding and rejecting range rate outliers), the properties (for example range-rate) of all associated detections may be compared with each other (it is to be noted that in the association step, properties of detections are compared with properties of objects, and in the step of finding and rejecting outliers, properties of detections are compared with properties of detections). For example, the measured range rate of all associated detections may be compared in order to find detections which have range rates that differ too much from all the rest. However, in some scenarios, it may not be possible to do this or the comparison in a robust way. Such cases may for example be when there are few number of detections, for example if the object is small (for example a pedestrian) or if the object is further away (it will be understood that the closer to host vehicle is to the object, the more detections may be expected to be obtained from the object). If for example there is only one single associated detection in a time frame, then there may be no other detections to which its range rate can be compared. For example, if there are two associated detections with different range rates, then it may be difficult to tell which one of them is an inlier and which is not an outlier.

Commonly used methods may assume that the predicted range rate error (for example the difference between the assumed/predicted range rate given the estimated object states and the actual measured range rate from the radar) should be close to 0. However, this may be true only when the tracking is successful and the object is driving in steady state (and not doing any hard maneuvers). Accordingly, this assumption may not always work well.

According to various embodiments, methods are provided for enhanced association results.

According to various embodiments, instead of doing instant comparison between all the currently associated detections in each single time frame, the mean and variance filter may be applied to the predicted range rate errors of all associated detections. The predicted range rate errors may correspond to the difference between the expected range rate given the estimated object properties and the actual radar measurements of the detections. Since the filter according to various embodiments is iterative, it may not be necessary to store individual detections over time, but it may be sufficient to store only the three single states of the mean and variance filter. In each time frame, given the estimated filtered mean and variance of the predicted range rate error, a Student's T hypothesis test may be done on the range rate of all newly associated detections to determine if it is likely that the newly associated detection is an inlier or if it is an outlier that should not be used in the Kalman filter update. Since the filter according to various embodiments is using not only the current detections but also information from historical detections, detection of outliers may be provided in a more robust way also for the case of small number of detections in each time frame.

According to various embodiments, detection range rate outlier rejection may be carried out after association to a tracked object.

According to various embodiments, starting from a set of radar detections that already has been associated to a tracked radar object, range rate outliers may be found. In other words, associated detections with range rates that do not correspond well to the range rates of other associated detections are found.

According to various embodiments, the method may include the following steps:

1. The state vector $s_n$ may be initialized with zeros: $s_n = [s_{1,n} \ s_{2,n} \ s_{3,n}]^T = [0 \ 0 \ 0]^T$ for n=0
For each time and each moveable object, the following steps may be carried out:

2. (Radar) detections may be associated to the object. This step may be the same association that may be done in order to run a Kalman filter for tracking the object's 2D (two-dimensional) position, speed, and/or heading, and various methods may be used for associating the radar detections to the object.

3. For each associated detection, the predicted range rate error (i.e. the difference between the expected range rate given the tracked object states and the actual measured range rate) may be determined.

4. The state vector may be updated according to equation (1) as described above with the new predicted range rate error information from all associated detections (wherein the sample (or measurement data) based on which the state vector is updated may be the new predicted range rate error information).

5. Test threshold variables may be determined. A lower threshold $t_{low}$ and an upper threshold $t_{high}$ may be determined.

For example, $$t_{low} \triangleq \bar{e}_N - k\sqrt{\hat{e}_N} \quad \text{and} \quad t_{high} \triangleq \bar{e}_N + k\sqrt{\hat{e}_N}$$ may be determined, wherein $k$ may be a tuning variable.

7. For each associated detection, the predicted range rate error may be compared with the two thresholds. If the predicted range rate error is between the lower threshold and the upper threshold, the detection may be determined to be an inlier, and determined to be an outlier otherwise:
$t_{low}$ < predicted_range_rate_error < $t_{high}$ => the detection is an inlier, else it is an outlier.

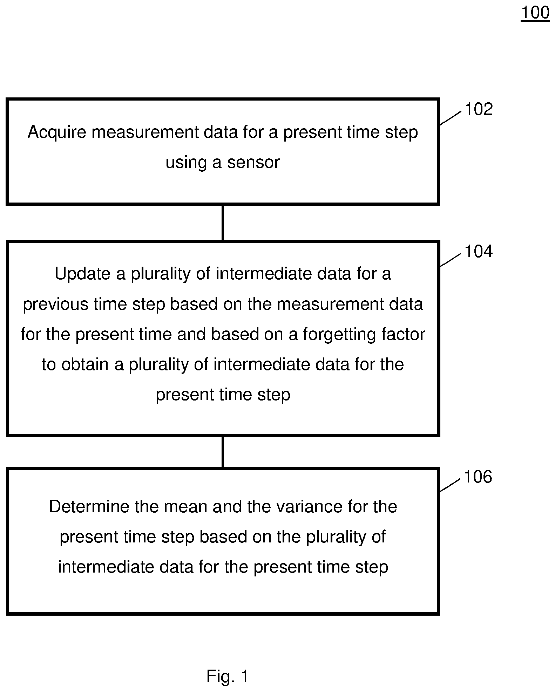

Fig. 1 shows a flow diagram 100 illustrating a method for determining a mean and a variance of measurement data according to various embodiments. In 102, measurement data for a present time step may be acquired using a sensor. In 104, a plurality of intermediate data for a previous time step may be updated based on the measurement data for the present time and based on a forgetting factor to obtain a plurality of intermediate data for the present time step. In 106, the mean and the variance for the present time step may be determined based on the plurality of intermediate data for the present time step.

According to various embodiments, the intermediate data (for each time step) may include or may be three numbers.

According to various embodiments, the three numbers may be initialized with values of 0.

According to various embodiments, the three numbers (for each time step) may include a first number (for each time step), a second number (for each time step), and a third number (for each time step). Updating the first number may include or may be multiplying the first number by the forgetting factor and adding a number of measurements included in the measurement data. Updating the second number may include or may be multiplying the second number by the forgetting factor and adding the measurements included in the measurement data. Updating the third number may include or may be multiplying the third number by the forgetting factor and adding squares of the measurements included in the measurement data.

According to various embodiments, determining the mean may include or may be determining a ratio between the second number and the first number. According to various embodiments, determining the variance may include or may be determining a ratio between a difference of the third number and a square of the mean and a difference between the first number and 1.

According to various embodiments, the forgetting factor may be a number between 0 and 1.

According to various embodiments, the measurement data may include or may be height information.

According to various embodiments, the method may further include determining underdrivability and/or overdrivability based on the mean and the variance.

According to various embodiments, the underdrivability and/or the overdrivability may be determined based on a Student's T distribution based on the mean and the variance.

According to various embodiments, the measurement data may include or may be range rate information.

According to various embodiments, the method may further include determining outliers in an association method during object tracking.

According to various embodiments, the outliers may be determined based on thresholds, wherein the thresholds are determined based on the mean and the variance.

Each of the steps 102, 104, 106 and the further steps described above may be performed by computer hardware components.

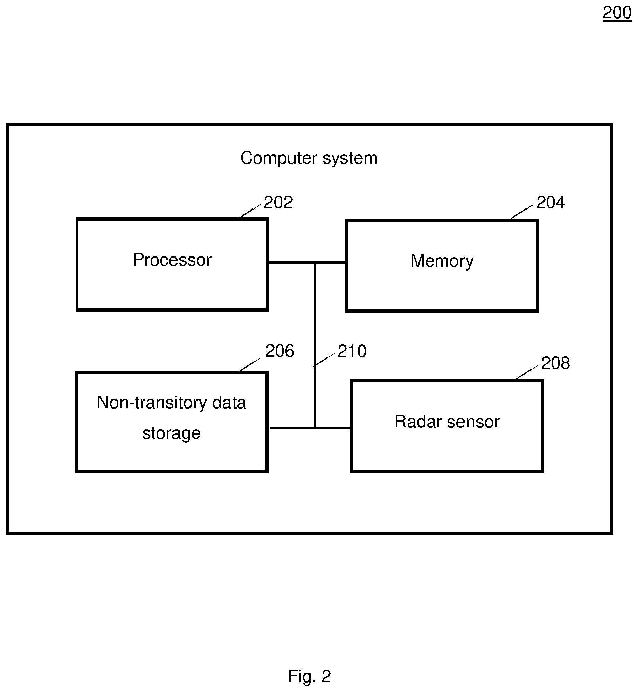

Fig. 2 shows a computer system 2000 with a plurality of computer hardware components configured to carry out steps of a computer implemented method for determining a mean and a variance of measurement data according to various embodiments. The computer system 200 may include a processor 202, a memory 204, and a non-transitory data storage 206. A sensor 208 may be provided as part of the computer system 200 (like illustrated in Fig. 2), or may be provided external to the computer system 200.

The processor 202 may carry out instructions provided in the memory 204. The non-transitory data storage 206 may store a computer program, including the instructions that may be transferred to the memory 204 and then executed by the processor 202. The sensor 208 may be used for acquiring measurement data as described above.

The processor 202, the memory 2004, and the non-transitory data storage 206 may be coupled with each other, e.g. via an electrical connection 210, such as e.g. a cable or a computer bus or via any other suitable electrical connection to exchange electrical signals. The sensor 208 may be coupled to the computer system 200, for example via an external interface, or may be provided as parts of the computer system (in other words: internal to the computer system, for example coupled via the electrical connection 210).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 200.

Reference numeral list

100    flow diagram illustrating a method for determining a mean and a variance of measurement data according to various embodiments

102    step of acquiring measurement data for a present time step using a sensor

104    step of updating a plurality of intermediate data for a previous time step based on the measurement data for the present time and based on a forgetting factor to obtain a plurality of intermediate data for the present time step

106    step of determining the mean and the variance for the present time step based on the plurality of intermediate data for the present time step.

200    computer system according to various embodiments

202    processor

204    memory

206    non-transitory data storage

208    sensor

210    connection

**Claims**

1. Computer implemented method for determining a mean and a variance of measurement data, the method comprising the following steps carried out by computer hardware components:

   - acquiring (102) measurement data for a present time step using a sensor;
   - updating (104) a plurality of intermediate data for a previous time step based on the measurement data for the present time and based on a forgetting factor to obtain a plurality of intermediate data for the present time step; and
   - determining (106) the mean and the variance for the present time step based on the plurality of intermediate data for the present time step.

2. The computer implemented method of claim 1, wherein the intermediate data comprises three numbers.

3. The computer implemented method of at least one of claims 1 to 2, wherein the three numbers are initialized with values of 0.

4. The computer implemented method of at least one of claims 1 to 3,

   wherein the three numbers comprise a first number, a second number, and a third number;
   wherein updating the first number comprises multiplying the first number by the forgetting factor and adding a number of measurements included in the measurement data;
   wherein updating the second number comprises multiplying the second number by the forgetting factor and adding the measurements included in the measurement data; and
   wherein updating the third number comprises multiplying the third number by the forgetting factor and adding squares of the measurements included in the measurement data.

5. The computer implemented method of at least one of claims 1 to 4,

   wherein determining the mean comprises determining a ratio between the second number and the first number; and
   wherein determining the variance comprises determining a ratio between a difference of the third number and a square of the mean and a difference between the first number and 1.

6. The computer implemented method of at least one of claims 1 to 5, wherein the forgetting factor is a number between 0 and 1.

7. The computer implemented method of at least one of claims 1 to 6, wherein the measurement data comprises height information.

8. The computer implemented method of claim 7, further comprising the following step carried out by the computer hardware components:

   determining underdrivability and/or overdrivability based on the mean and the variance.

9. The computer implemented method of at least one of claims 7 to 8, wherein the underdrivability and/or the overdrivability is determined based on a Student's T distribution based on the mean and the variance.

10. The computer implemented method of at least one of claims 1 to 6, wherein the measurement data comprises range rate information.

11. The computer implemented method of claim 10, further comprising the following step carried out by the computer hardware components: determining outliers in an association method during object tracking.

**12.** The computer implemented method of at least one of claims 10 to 11,
wherein the outliers are determined based on thresholds, wherein the thresholds are determined based on the mean and the variance.

**13.** Computer system (200), the computer system (200) being configured to carry out the computer implemented method of at least one of claims 1 to 12.

**14.** Vehicle, comprising the computer system of claim 13 and the sensor (208).

**15.** Non-transitory computer readable medium comprising instructions for carrying out the computer implemented method of at least one of claims 1 to 12.

<u>100</u>

┌─────────────────────────────────────┐ 102
│                                     │
│  Acquire measurement data for a present time step │
│              using a sensor          │
│                                     │
└─────────────────────────────────────┘

┌─────────────────────────────────────┐ 104
│                                     │
│   Update a plurality of intermediate data for a     │
│  previous time step based on the measurement data   │
│  for the present time and based on a forgetting factor │
│   to obtain a plurality of intermediate data for the  │
│              present time step       │
│                                     │
└─────────────────────────────────────┘

┌─────────────────────────────────────┐ 106
│                                     │
│   Determine the mean and the variance for the       │
│    present time step based on the plurality of      │
│   intermediate data for the present time step       │
│                                     │
└─────────────────────────────────────┘

Fig. 1

200

Computer system

Processor 202

Memory 204

Non-transitory data storage 206

210

Radar sensor 208

Fig. 2

Europäisches
Patentamt

European
Patent Office

Office européen
des brevets

# EUROPEAN SEARCH REPORT

**Application Number**

EP 24 17 3063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SALWALA DHAVAL ET AL: "Distributed Incremental Machine Learning for Big Time Series Data", 2022 IEEE INTERNATIONAL CONFERENCE ON BIG DATA (BIG DATA), IEEE, 17 December 2022 (2022-12-17), pages 2356-2363, XP034283033, DOI: 10.1109/BIGDATA55660.2022.10020361 [retrieved on 2023-01-26] * section III; figure 3 * | 1-15 | INV. G06F17/18 B60W60/00 |
| A | Szlachetka Marek: "Freespace detection and examination based on surround occupancy grid", Doctoral Thesis at the Faculty of Electrical Engineering, Automatics, Computer Science and Biomedical Engineering, 1 October 2023 (2023-10-01), pages 1-157, XP093101936, Krakow, Poland Retrieved from the Internet: URL:https://www.eaiib.agh.edu.pl/wp-content/uploads/2023/10/PhD_thesis_Marek_Szlachetka.pdf [retrieved on 2023-11-15] * sections 3-5 * | 1-15 | |
| A | EP 4 336 384 A1 (AIRBUS DEFENCE & SPACE LTD [GB]) 13 March 2024 (2024-03-13) * paragraph [0028] - paragraph [0031] * | 1-15 | |

**TECHNICAL FIELDS SEARCHED (IPC)**

G06F
B60W

The present search report has been drawn up for all claims

| Place of search | Date of completion of the search | Examiner |
|---|---|---|
| Berlin | 22 October 2024 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**EP 4 645 123 A1**

## ANNEX TO THE EUROPEAN SEARCH REPORT
## ON EUROPEAN PATENT APPLICATION NO.

EP 24 17 3063

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2024

| Patent document cited in search report | Publication date | Patent family member(s) | Publication date |
|---|---|---|---|
| EP 4336384 A1 | 13-03-2024 | EP 4336384 A1 | 13-03-2024 |
| | | GB 2622242 A | 13-03-2024 |

EPO FORM P0459

For more details about this annex : see Official Journal of the European Patent Office, No. 12/82